# FASCICULE DE BREVET EUROPEEN

(11) **EP 0 527 692 B1**
(45) Date de publication et mention de la délivrance du brevet: **29.04.1998**
(21) Numéro de dépôt: 92420270.8
(22) Date de dépôt: 05.08.1992
(51) Int. Cl.: H04B 3/23

(54) **Annuleur d'écho lointain**
Fernechokompensator
Far-end echo canceller

(30) Priorité: 09.08.1991 FR 9110424
(43) Date de publication de la demande: 17.02.1993
(73) Titulaire: SGS-THOMSON MICROELECTRONICS S.A., 94250 Gentilly (FR)
(72) Inventeur: Vicard, Dominique, F-38130 Echirolles (FR); Glass, William, F-38170 Seyssinet-Pariset (FR); Druilhe, François, F-38180 Seyssins (FR)
(74) Mandataire: de Beaumont, Michel

(56) Documents cités:
- EP-A- 0 385 136
- ELECTRONIC DESIGN. vol. 37, no. 8, 13 Avril 1989, HASBROUCK HEIGHTS, NEW JERSEY pages 137 - 142,'DSP Quashes Echoes in V.32 Modems'
- PATENT ABSTRACTS OF JAPAN vol. 13, no. 38 (E-709)(3386) 27 Janvier 1989 & JP-A-63 236 422
- Modem Data Book and Applications, 1ère édition, Mai 1989, de SGS-THOMSON Microelectronics (ST), pages 140, 141

## Description

La présente invention concerne les modulateurs/démodulateurs (modems) à transmission bilatérale simultanée (duplex) dans une même bande de fréquence, sur une ligne bifilaire.

Comme cela est connu, de tels modems utilisent, pour la réception, un annuleur d'écho.

L'organisation générale d'un tel modem est par exemple illustrée dans les figures apparaissant en pages 140 et 141 du Modem Data Book and Applications, 1ère édition, Mai 1989, de SGS-THOMSON Microelectronics (ST). Comme cela est également connu et indiqué dans le texte associé aux figures susmentionnées, un annuleur d'écho comprend généralement deux canaux, un canal d'annulation des échos proches liés au coupleur de l'émétteur et aux parties proches de la ligne, et un canal d'annulation des échos lointains correspondant par exemple à une transmi ssion par un ou plusieurs satell ites. L'annuleur d'écho lointain doit recevoir un signal correspondant au signal émis retardé de la durée de la transmission et de l'écho sur les satel lites, c'est-à-dire par exemple une durée de l'ordre de la seconde. Ceci implique d'utiliser une ligne à retard, en pratique une mémoire, ayant une capacité de mémorisation importante, par exemple de l'ordre de 4 kmots pour le retard sus-indiqué.

Dans une architecture de modem classique, il est prévu un microcontrôleur d'usage général, éventuellement constitué par le processeur central d'un ordinateur personnel auquel est rattaché le modem, comprenant notamment des circuits d'interface avec l'équipement terminal (DTE) émettant et recevant des données par l'intermédiaire du modem, un interpréteur de commandes DTE, des circuits de compression de données, et des circuits de correction d'erreurs... Les fonctions propres au modem, et notamment la fonction de suppression d'écho, sont réali sées sur un ou plusieurs circuits intégrés autonomes comprenant notamment un processeur rapide pour effectuer très rapidement les calculs nécessaires à la mise en oeuvre de ces fonctions. Ces circuits sont couramment appelés circuits de pompe de données.

Plus particulièrement, dans les architectures classiques, la pompe de données assurant la fonction de suppresseur d'écho doit être associée à la mémoire de signaux émis susmentionnée. Pour des raisons de cohérence avec le reste des éléments prévus dans la pompe de données, cette mémoire est une mémoire rapide dont les temps d'accès sont de plusieurs ordres de grandeur supérieurs à ceux nécessaires à la fonction remplie, par exemple une mémoire de type SRAM, qui occupe une surface relativement importante. Dans de nombreux cas, par exemple dans celui du circuit SGS-THOMSON cité ci-dessus, cette mémoire est constituée d'une puce de circuit intégré distincte de la pompe de données elle-même. En effet une intégration monolithique conduirait généralement à une surface de puce trop importante.

Cette architecture de l'art antérieur présente donc plusieurs inconvénients.

Un premier inconvénient est, comme cela a été indiqué, de nécessiter la prévision d'une mémoire externe spécifique.

Un deuxième inconvénient, lié au premier, est qu'il convient d'assurer une liaison d'adressage et de données entre la pompe de données et sa mémoire externe. Dans le cas où la mémoire a une dimension de 4 kmots, on notera que l'adressage doit se faire sur un minimum de 12 bits. Ceci implique que 12 plots devront spécifiquement être alloués à cet adressage, ce qui augmente la taille de la puce de pompe de données.

Un objet de la présente invention est de prévoir une nouvelle architecture de modem comprenant un annuleur d'écho palliant les inconvénients susmentionnés.

Pour atteindre cet objet, la présente invention prévoit un annuleur d'écho lointain pour modem duplex comprenant au moins un processeur rapide constituant une unité arithmétique et logique et réalisant des opérations de filtrage et un microcontrôleur de commande, dans lequel des données caractéristiques des données émises, nécessaires pour l'opération de suppression d'échos lointains, sont stockées dans une mémoire gérée par le microcontrôleur.

Ces objets, caractéristiques et avantages ainsi que d'autres de la présente invention seront exposés plus en détail dans la description ci-après qui comprend un rappel de l'état de la technique et la description de modes de réalisation de l'invention, en relation avec les figures jointes parmi lesquelles :
la figure 1 illustre les principaux éléments d'une pompe de données classique comprenant un annuleur d'écho ;
la figure 2 représente schématiquement un annuleur d'écho classique ;
la figure 3 représente l'association du circuit de la figure 1 avec un contrôleur de données ;
la figure 4 représente une réalisation d'annuleur d'écho selon l'art antérieur ;
la figure 5 représente une réalisation d'annuleur d'écho selon la présente invention ; et
la figure 6 représente une architecture d'ensemble d'un modem selon la présente invention.

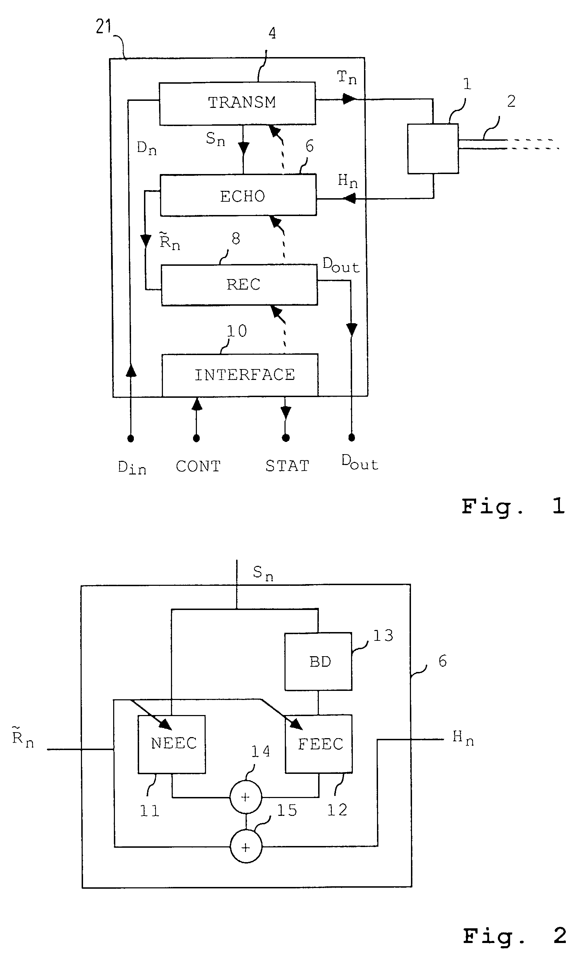

La figure 1 représente les éléments principaux d'un circuit de pompe de données, généralement regroupés sur une ou plusieurs puces d'un modem. Ce circuit est destiné à émettre et recevoir des signaux par l'intermédiaire d'un circuit de couplage 1 relié à une ligne bifilaire 2. Le circuit émetteur 4 envoie des signaux Tn vers le coupleur 1. Ces signaux Tn sont des signaux ayant subi divers traitements de brouillage et de codage et correspondent à des données d'entrée Din. Les signaux reçus Hn en provenance du coupleur 1 sont transmis notamment à un annuleur d'écho 6 puis à un récepteur 8 qui les décode et fournit des données de sortie Dout. L'annuleur d'écho 6 reçoit des signaux Sn qui correspondent aux données Din partiellement ou totalement traitées par l'émetteur 4. L'ensemble des circuits 4, 6 et 8 est commandé par un contrôleur externe fournissant des signaux de commande CONT à un circuit d'interface 10 qui pilote le récepteur, l'annuleur d'écho et l'émetteur et en reçoit des signaux d'état (STAT) qu'il renvoie au contrôleur.

La figure 2 illustre très schématiquement le fait que l'annuleur d'écho 6 comprend deux voies, une voie d'annulation d'écho proche NEEC 11, et une voie d'annulation d'écho lointain FEEC 12. L'annuleur d'écho proche 11 reçoit pratiquement directement les signaux Sn liés aux signaux émis et l'annuleur d'écho lointain reçoit ces signaux Sn par l'intermédiaire d'un circuit de retard 13. Les signaux d'annulation d'échos proches et lointains sont additionnés dans un premier sommateur 14 puis sont ensuite ajoutés au signal Hn par l'additionneur 15 pour fournir le signal sans écho.

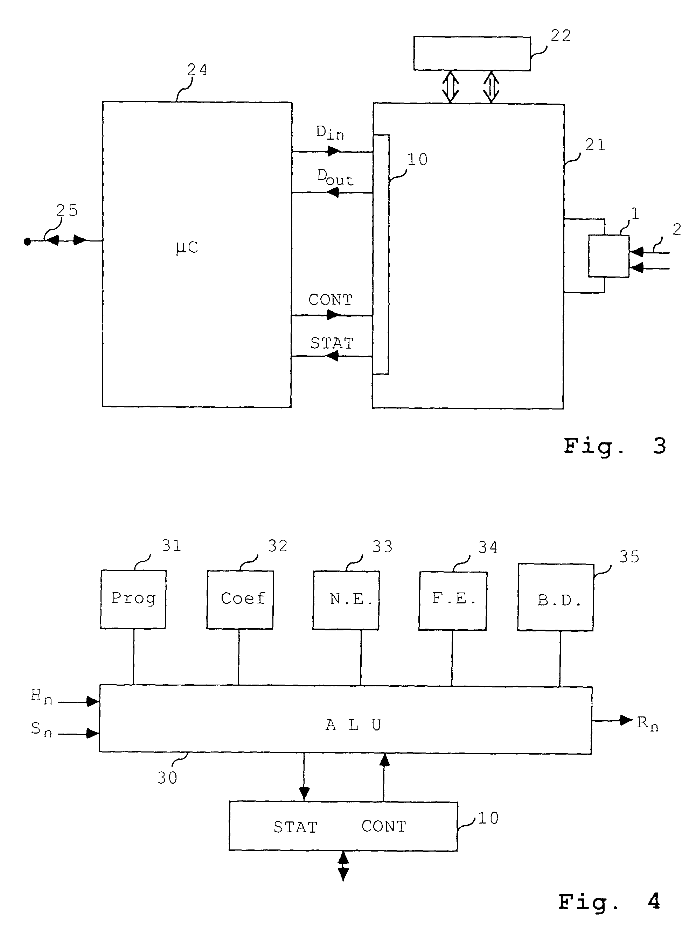

La figure 3 représente un aspect de l'architecture classique d'un modem. Les circuits de pompe de données de la figure 1, désignés par la référence 21, sont associés au coupleur 1, à une mémoire 22 assurant la fonction de ligne à retard désignée par la référence 13 en figure 2, et à un microcontrôleur 24 par l'intermédiaire du circuit d'interface 10. De façon classique, le microcontrôleur, comme cela a été indiqué précédemment, échange des données avec un terminal de données auquel le modem est associé, par l'intermédiaire d'une ligne ou plutôt d'un bus 25. Le microcontrôleur comprend généralement des zones de mémoire rapide interne et des zones de mémoire externe éventuellement plus lente.

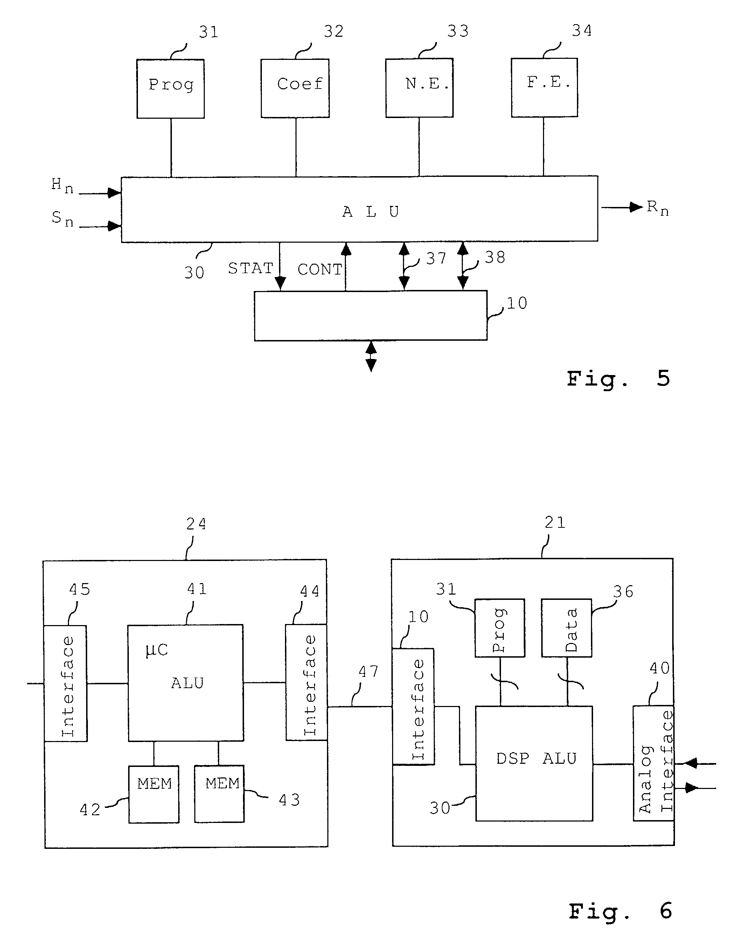

La figure 4 illustre une réalisation pratique sous forme schématique d'un annuleur d'écho. Celui-ci comprend essentiellement une unité arithmétique et logique (ALU) ou processeur rapide 30 destiné à effectuer des calculs sur les données Sn et Hn précédemment définies. Pour cela, l'unité arithmétique et logique 30 est associée à diverses mémoires, 31 à 35. La mémoire 31 est une mémoire qui contient le programme de fonctionnement de l'ALU 30. La mémoire 32 est une mémoire de coefficients qui sont utilisés pour les opérations d'annulation. La mémoire 33 est une mémoire de symboles ou de signaux pour l'annuleur d'écho proche (NE). La mémoire 34 est une mémoire de symboles ou de signaux pour l'annuleur d'écho lointain (FE). La mémoire 35 correspond à la ligne à retard associée au traitement des signaux d'écho lointain. Dans une réalisation classique, la mémoire 31 aura une capacité d'environ 2 kmots, les mémoires 32 à 34 des capacités de 128 mots, et la mémoire 35 servant de ligne à retard une capacité de l'ordre de 4 kmots.

Etant donné que c'est la même unité arithmétique et logique 30 qui travaille avec les diverses mémoires, ces diverses mémoires sont réalisées généralement selon la même technologie, à savoir une technologie très rapide nécessaire au traitement des données stockées dans les mémoires 33 et 34 en association avec les coefficients stockés dans la mémoire 32. Ainsi, de façon générale, toutes ces mémoires sont des mémoires relativement encombrantes, par exemple en technologie SRAM. Egalement, de façon usuelle, les mémoires 31 à 34 sont réalisées sur la même puce que celle qui incorpore l'unité arithmétique et logique 30, alors que la mémoire 35, de plus grande dimension, est habituellement réalisée sur une puce séparée à laquelle l'unité arithmétique et logique est connectée par un grand nombre de broches, étant donné que cette mémoire a nécessairement un grand nombre d'adresses.

Comme cela a été mentionné précédemment, l'ALU 30 est cadencée par des signaux de commande CONT en provenance du microcontrôleur par l'intermédiaire de l'interface 10 et renvoie des signaux d'état STAT.

La présente invention se base sur une analyse du circuit classique de la figure 4. On s'aperçoit qu'en fait le cadencement d'introduction et de sortie des données Hn, Sn et Rn est très lent devant la vitesse à laquelle doivent s'effectuer les calculs concernant les données mémorisées dans les mémoires 32 à 34. Par contre, les données contenues dans la mémoire 35 peuvent être fournies seulement au même rythme que les données Hn, Sn et Rn. Ainsi, la présente invention propose d'utiliser, pour stocker les données destinées au calcul de l'écho lointain, une mémoire associée non pas directement à l'unité arithmétique et logique mais au microcontrôleur.

Un exemple d'architecture mettant en oeuvre l'invention est illustré en figure 5. La figure 5 reprend les mêmes éléments que ceux de la figure 4 avec les mêmes références. La différence essentielle est que la mémoire de retard 35 est supprimée et qu'au lieu de cela, sont prévues des liaisons 37, 38 vers l'interface permettant d'envoyer vers le microcontrôleur des données affectées d'adresses virtuelles et de rappeler ces données à ces adresses virtuelles, le microcontrôleur se chargeant de la gestion de la mémorisation. En effet, le microcontrôleur est généralement associé à une mémoire de grande dimension, par exemple de l'ordre de 64 kmots à 1 Mmot et il reste toujours dans cette mémoire suffisament de place pour contenir les 4 kmots normalement prévus dans la mémoire 35.

On notera que la communication entre le circuit d'interface 10 et un circuit d'interface correspondant du microcontrôleur peut se faire sur le nombre de lignes normalement utilisé pour échanger les signaux de données, de commande et d'état, par exemple sur un bus à 8 lignes dans lequel les données sont envoyées sous forme série. Ainsi, grâce à la présente invention, on n'augmente pas le nombre de liaisons entre la pompe de données et le microcontrôleur et on supprime les très nombreuses broches nécessaires à la connexion entre cette pompe de données et une mémoire 22 telle qu'illustrée en figure 3 (on notera que la référence 22 de la figure 3 et la référence 35 de la figure 4 désignent des mémoires ayant la même fonction).

La figure 6 illustre le schéma d'ensemble du couplage entre le microcontrôleur et la pompe de données selon l'invention. On y retrouve les divers éléments précédemment mentionnés avec les mêmes références. Notamment, dans la pompe de données 21, on a fait figurer l'ALU 30, la mémoire de programme 31, les diverses mémoires de coefficients et de données pour le traitement d'échos proches et lointains regroupées en une mémoire unique 36. L'interface avec le microcontrôleur porte la référence 10 et une interface analogique avec le coupleur 1 porte la référence 40. En effet, bien que cela n'ait pas été décrit précédemment, il sera clair pour l'homme de l'art que le circuit selon la présente invention comprend des circuits de conversion numérique/analogique et analogique/numérique pour permettre le traitement des données sous forme numérique dans l'unité arithmétique et logique 30, et l'émission et la réception des données vers la ligne bifilaire sous forme analogique. Le microcontrôleur 24 comprend une unité arithmétique et logique 41, couplée à une mémoire de programme 42, par exemple une mémoire de type ROM, et à une mémoire de données et de paramètres 43, par exemple une mémoire de type DRAM, qui servira notamment à stocker les données précédemment mémorisées dans la mémoire 35. Les mémoires 42 et 43 sont généralement réalisées pour partie sur la même puce que le microcontrôleur et pour leur plus grande partie sur des puces externes selon les technologies utilisées. Le microcontrôleur comprend également un circuit d'interface 44 vers la pompe de données et un circuit d'interface 45 vers les circuits d'où proviennent les signaux à émettre sur la ligne bifilaire et à recevoir de celle-ci. On a représenté sous forme d'une liaison unique 47 la liaison entre les interfaces 10 et 44. Cette liaison est par exemple une liaison série, ou une zone de mémoire à double accès sur 8 bits, ou encore une boîte aux lettres.

La présente invention est suceptible de nombreuses variantes et modifications qui apparaîtront à l'homme de l'art, notamment en ce qui concerne les capacités des diverses mémoires, les valeurs précédemment indiquées l'étant uniquement à titre d'exemple et les modes de liaison entre microcontrôleur et pompe(s) de données.

## Revendications

1. Annuleur d'écho lointain pour modem duplex comprenant au moins un processeur rapide (30) constituant une unité arithmétique et logique et réalisant des opérations de filtrage et un microcontrôleur de commande (41), caractérisé en ce que des données caractéristiques des données émises, nécessaires pour l'opération de suppression d'échos lointains, sont stockées dans une mémoire (43) gérée par le microcontrôleur.

2. Annuleur d'écho lointain selon la revendication 1, caractérisé en ce que ladite mémoire (43) est une mémoire de type DRAM.

3. Annuleur d'écho lointain selon la revendication 1, caractérisé en ce que lesdites données caractéristiques arrivent sur le processeur rapide (30) et sont renvoyées vers le microcontrôleur (41) puis rappelées de celui-ci par une interface (10) incluant une mémoire à double accès de faible capacité.

## Patentansprüche

1. Fernechokompensations- bzw. -annuliervorrichtung für ein Duplexmodem, mit wenigstens einem schnellen Prozessor (30), der eine arithmetisch-logische Einheit darstellt und Filterungsoperationen durchführt, sowie mit einem Mikrosteuerteil (41) als Steuerung,
dadurch gekennzeichnet, daß für die übertragenen Daten charakteristische und für die Wirkungsweise der Fernecho-Unterdrückung notwendige Daten in einem von der Mikrosteuereinheit verwalteten Speicher (43) gespeichert sind.

2. Fernechokompensator nach Anspruch 1,
dadurch gekennzeichnet, daß der genannte Speicher (43) ein DRAM-Speicher ist.

3. Fernechokompensator nach Anspruch 1,
dadurch gekennzeichnet, daß die genannten charakteristischen Daten in den schnellen Prozessor (30) gelangen und über ein Interface (10), welches einen Speicher geringer Abmessung mit doppeltem Zugriff enthält, in die Mikrosteuereinheit (41) geschickt und sodann aus dieser wieder über das Interface abgerufen werden.

## Claims

1. A far-end echo canceller for a duplex modem comprising at least one high-speed processor (30) constituting an arithmetic and logic unit performing filtering operations and a control microcontroller (41), characterized in that data characterizing transmitted data and necessary for cancelling far-end echoes, are stored in a memory (43) managed by said microcontroller.

2. A far-end echo canceller according to claim 1, characterized in that said memory (43) is a DRAM-type memory.

3. A far-end echo canceller according to claim 1, characterized in that said characterizing data arrive on the high-speed processor (30) and are sent back to the microcontroller (41) and recalled from the latter by an interface (10) including a small-size double access memory.
